# EUROPÄISCHE PATENTSCHRIFT

(11) **EP 1 920 953 B1**
(45) Veröffentlichungstag und Bekanntmachung des Hinweises auf die Patenterteilung: **16.12.2009**
(21) Anmeldenummer: 07020893.9
(22) Anmeldetag: 25.10.2007
(51) Int. Cl.: B60H 1/22

(54) **Steuervorrichtung für eine Zusatzeinrichtung eines Fahrzeugs**
Control device for an auxiliary device of a vehicle
Dispositif de commande pour un équipement supplémentaire d'un véhicule

(30) Priorität: 07.11.2006 DE 102006052370
(43) Veröffentlichungstag der Anmeldung: 14.05.2008
(73) Patentinhaber: GM Global Technology Operations, Inc., Detroit, MI 48265-3000 (US)
(72) Erfinder: Kettern-Kohler, Horst, 74722 Buchen (DE)
(74) Vertreter: Daniel, Ulrich W.P.

(56) Entgegenhaltungen:
- EP-A- 0 780 252
- EP-A- 1 584 507
- EP-A- 1 604 850
- DE-A1- 3 024 983
- DE-A1- 10 326 596

## Beschreibung

Die Erfindung betrifft eine Steuervorrichtung für eine Zusatzeinrichtung für oder in einem Fahrzeug, sowie eine Fahrzeugzusatzeinrichtung mit einer solchen Steuereinrichtung. Ferner betrifft die Erfindung ein Verfahren zum Betreiben einer Fahrzeugzusatzeinrichtung.

Bestimmte Arten von Zusatzgeräten von Fahrzeugen wie Standheizungen für die Fahrgastzelle oder den Motor eines Fahrzeugs werden vor einer Nutzung des Fahrzeugs bei parkendem Fahrzeug betrieben, um das Fahrzeug in einen für die anschließende Nutzung gewünschten Zustand zu bringen. Um nicht eigens zur Betätigung dieser Zusatzgeräte das Fahrzeug aufsuchen zu müssen, werden verschiedene Schaltuhren, Steuergeräte und Fernbedienungen verwendet, auf denen der Nutzer eine gewünschten Einschaltzeitpunkt für das Zusatzgerät oder eine gewünschten Nutzungszeitpunkt für das Fahrzeug vorwählt. Manche Systeme sehen die Speicherung mehrerer Betriebszeitpunkte der Zusatzeinrichtung vor, die einzeln abgerufen und aktiviert werden können.

Dies wird z.B. in der DE 30 24 983 gezeigt.

Hierbei ergibt sich das Problem wachsender Komplexität der Bedienung. Um einerseits die Zusatzeinrichtung regelmäßig in Anspruch nehmen zu können, andererseits aber zu vermeiden, dass die Zusatzeinrichtung ohne Nutzung des Fahrzeugs betrieben und damit Energie verschwendet wird, muss der Fahrzeugnutzer ständig an die Programmierung der Zusatzeinrichtung denken oder diese durchführen.

Aufgabe der Erfindung ist das Bereitstellen einer Steuervorrichtung für eine Zusatzeinrichtung der genannten Art, die eine zuverlässige und dabei Energieverschwendung vermeidende Nutzung der Zusatzeinrichtung bei geringem Bedienungs- und Gedächtnisaufwand auf Seiten des Nutzers erlaubt.

Gemäß der vorliegenden Erfindung wird eine Steuervorrichtung für eine Zusatzeinrichtung für oder in einem Fahrzeug bereitgestellt. Die Steuervorrichtung umfasst einen Speicher, eine Schalteinheit und eine Detektiereinheit, wobei der Speicher einen ersten und einen zweiten vorgewählten Betriebszeitpunkt der Zusatzeinrichtung speichert, die Schalteinheit die Zusatzeinrichtung des Fahrzeugs zu den gespeicherten Betriebszeitpunkten einschaltet und die Detektiereinheit detektiert, ob eine Nutzung des Fahrzeugs stattfindet. Weiterhin umfasst die Steuervorrichtung ein Mittel zum Deaktivieren des zweiten Betriebszeitpunkts, welches den zweiten Betriebszeitpunkt deaktiviert, wenn die Detektiereinheit keine Nutzung des Fahrzeugs zum ersten Betriebszeitpunkt detektiert.

Die erfindungsgemäße Steuereinrichtung vereinfacht die Nutzung der durch sie gesteuerten Zusatzeinrichtung, zum Beispiel einer Standheizung oder Stand-Klimaanlage, da die Zusatzeinrichtung für mehrere geplante Betriebszeitpunkte gleichzeitig programmiert werden kann, ohne dass der Fahrzeugnutzer daran gebunden ist, das Fahrzeug zu allen Betriebszeitpunkten auch tatsächlich zu nutzen. Ergibt sich eine Änderung der Nutzung des Fahrzeugs gegenüber den ursprünglich geplanten, im Speicher gespeicherten Betriebszeitpunkten, erfasst die Steuereinrichtung dies über die Detektiereinheit. Ausgehend von der Annahme, dass mit erhöhter Wahrscheinlichkeit das Fahrzeug auch zu dem weiter in der Zukunft liegenden zweiten Betriebszeitpunkt nicht genutzt werden wird, reagiert die Steuervorrichtung selbsttätig, indem sie den zweiten Betriebszeitpunkt deaktiviert, um mit Energieverschwendung verbundenes nutzloses Einschalten zu vermeiden.

Der Nutzer wird somit davon befreit, die gespeicherten Betriebszeitpunkte im Gedächtnis behalten zu müssen, da die Deaktivierung des zweiten Betriebszeitpunkts selbsttätig erfolgt. Dabei fällt maximal der Energieverbrauch für einen einmaligen Betrieb der Zusatzeinrichtung ohne Nutzung des Fahrzeugs an.

Gemäß einer Ausführungsform der Erfindung weist die Steuervorrichtung weiterhin eine Bedieneinheit auf, die ein Vorwählelement zum Vorwählen mindestens eines der Betriebszeitpunkte umfasst. Mit diesem Vorwählelement können der Nutzer oder eine weitere Person die ursprüngliche Programmierung der Betriebszeitpunkte vornehmen. In Fällen, in denen ein mit der Programmierung vertrauter Nutzer im Voraus weiß, dass er das Fahrzeug zu einem der vorgewählten Betriebszeitpunkte nicht nutzen wird, kann er die Vorwahl auch ändern und so den Energieverbrauch noch weiter senken. Vorzugsweise ist dabei das Vorwählelement zur Eingabe eines Wochentages und/oder eines Datums des Betriebszeitpunkts ausgebildet, so dass geplante Betriebszeitpunkte für einen größeren Zeitraum im Voraus eingegeben werden können.

Gemäß einer weiteren Ausführungsform ist das Vorwählelement dazu ausgebildet, die Betriebszeitpunkte als Teile einer Reihe wiederkehrender Betriebszeitpunkte vorzuwählen. Dabei ist das Mittel zum Deaktivieren dazu ausgebildet, die Reihe insgesamt zu deaktivieren, wenn die Detektiereinheit keine Nutzung des Fahrzeugs zum ersten Betriebszeitpunkt detektiert. Diese Ausführungsform ist besonders vorteilhaft, weil sie die Programmierung für regelmäßig wiederkehrende Betriebszeitpunkte ermöglicht. Zum Beispiel kann für Nutzer, denen die Handhabung programmierbarer Steuerungsvorrichtungen schwer fällt, eine Grundprogrammierung regelmäßiger Nutzungszeitpunkte auch durch eine weitere Person wie Familienmitglieder, Bekannte oder den Fahrzeughändler vorgenommen werden, was die Handhabung für diesen Personenkreis erheblich vereinfacht.

Gemäß einer Ausführungsform umfasst die Bedieneinheit weiterhin ein Aktivierungswahlelement, das den zweiten Betriebszeitpunkt wahlweise aktiviert. Bei dieser Ausführungsform kann der Nutzer, wenn der zweite Betriebszeitpunkt durch das Mittel zum Deaktivieren deaktiviert wurde, die Deaktivierung ohne den Betriebszeitpunkt erneut vorwählen zu müssen einfach dadurch rückgängig machen, dass er das Aktivierungswahlelement betätigt. Zum Beispiel kann so der Nutzer eine Reihe wiederkehrender Betriebszeitpunkte, die durch eine einmalige Nichtnutzung des Fahrzeugs selbsttätig deaktiviert wurde, schnell und einfach reaktivieren.

Optional umfasst die Bedieneinheit dabei weiterhin ein Anzeigeelement, das beim Abstellen des Fahrzeugs einen nächsten der vorgewählten Betriebszeitpunkte anzeigt. Das Aktivierungswahlelement ist dazu ausgebildet, den angezeigten Betriebszeitpunkt wahlweise zu aktivieren oder zu deaktivieren. Diese Ausführungsform hat den Vorteil, dass sie den Nutzer an den nächsten vorgewählten Betriebszeitpunkt erinnert. In den Fällen, wo der Nutzer zu diesem Zeitpunkt schon weiß, dass er das Fahrzeug zum angezeigten Betriebszeitpunkt nicht nutzen wird, kann er durch eine einfache Betätigung des Aktivierungswahlelements den Zeitpunkt deaktivieren, so dass der Energieverbrauch weiter gesenkt wird. Umgekehrt kann der Nutzer in dem Fall, dass der angezeigte nächste Betriebszeitpunkt in deaktiviertem Zustand ist, diesen reaktivieren, wenn er bereits weiß, dass er das Fahrzeug zum angezeigten Betriebszeitpunkt nutzen wird.

Gemäß einer Ausführungsform umfasst die Bedieneinheit weiterhin ein Bevorzugungselement, das den zweiten Betriebszeitpunkt als bevorzugten Betriebszeitpunkt vorwählt. Dabei ist das Mittel zum Deaktivieren dazu ausgebildet, den zweiten Betriebszeitpunkt nicht zu deaktivieren, wenn der zweite Betriebszeitpunkt als bevorzugter Betriebszeitpunkt vorgewählt ist. Vorteilhafterweise von einer Deaktivierung ausnehmen kann der Nutzer zum Beispiel Betriebszeitpunkte, zu denen er das Fahrzeug mit besonders hoher Wahrscheinlichkeit nutzt, bei denen er aufgrund eines abweichenden Nutzungszwecks nur geringe Korrelation mit der Nutzung zu vorhergehenden Betriebszeitpunkten erwartet, oder bei denen er den Betrieb der Zusatzeinrichtung für besonders wichtig hält.

Gemäß einer Ausführungsform ist die Bedieneinheit als drahtlose Fernbedienungsvorrichtung für die Steuervorrichtung ausgebildet, was den Vorteil hat, dass der Nutzer zum Vorwählen, Aktivieren oder Deaktivieren der Betriebszeitpunkte das Fahrzeug nicht aufsuchen muss. Optional ist die drahtlose Fernbedienungsvorrichtung zusätzlich zu einer verdrahteten Bedieneinheit vorgesehen, so dass der Nutzer die Steuervorrichtung wahlweise über die drahtlose Fernbedienungseinrichtung oder die verdrahtete Bedieneinheit bedienen kann.

Gemäß einer Ausführungsform umfasst Steuervorrichtung weiterhin eine Kalendereinheit, die ermittelt, ob der Tag des ersten Betriebszeitpunktsein arbeitsfreier Tag ist. Dabei ist das Mittel zum Deaktivieren dazu ausgebildet, den zweiten Betriebszeitpunkt nicht zu deaktivieren, wenn der Tag des ersten Betriebszeitpunkts ein arbeitsfreier Tag ist. Diese Ausführungsform berücksichtigt vorteilhaft, dass im Allgemeinen nur eine geringe Korrelation zwischen einer Nichtnutzung des Fahrzeugs an einem arbeitsfreien Tag und einer eventuellen Nichtnutzung an einem späteren Arbeitstag besteht.

Gemäß einer Ausführungsform umfasst die Steuervorrichtung weiterhin eine Berechnungseinheit, die für mindestens einen der Betriebszeitpunkte eine Zeitdifferenz berechnet. Dabei ist die Schalteinheit dazu ausgebildet, die Zusatzeinrichtung um die Zeitdifferenz versetzt vor dem Betriebszeitpunkt einzuschalten. Diese Ausführungsform ist für typische Zusatzeinrichtungen wie Standheizungen von Vorteil, bei denen der optimale Einschaltzeitpunkt in Bezug auf die geplante Nutzung des Fahrzeugs von weiteren Parametern wie der Außentemperatur abhängt.

Unter einem anderen Gesichtspunkt stellt die vorliegende Erfindung eine Zusatzeinrichtung für oder in einem Fahrzeug bereit, die eine Steuervorrichtung wie oben beschrieben aufweist.

Ferner stellt die Erfindung unter einem weiteren Gesichtspunkt ein Verfahren zum Betreiben einer Zusatzeinrichtung für oder in einem Fahrzeug bereit, zum Beispiel mit Hilfe einer wie oben beschriebenen Steuervorrichtung. Das Verfahren umfasst zunächst Schritte des Vorwählens eines ersten und eines zweiten Betriebszeitpunkts der Zusatzeinrichtung und des Einschaltens der Zusatzeinrichtung zum ersten Betriebszeitpunkt. In einem Detektierschritt wird detektiert, ob zum ersten Betriebszeitpunkt eine Nutzung des Fahrzeugs stattfindet. In einem abschließenden Deaktivierschritt wird der zweite Betriebszeitpunkt deaktiviert, wenn zum ersten Betriebszeitpunkt keine Nutzung stattgefunden hat.

Gemäß einer Ausführungsform der Erfindung werden die Betriebszeitpunkte als Teile einer Reihe wiederkehrender Betriebszeitpunkte vorgewählt, wobei die Reihe deaktiviert wird, wenn keine Nutzung des Fahrzeugs zum ersten Betriebszeitpunkt detektiert wurde. Optional wird auch nach dem zweiten Betriebszeitpunkt detektiert, ob eine Nutzung des Fahrzeugs stattfindet, und die Reihe reaktiviert, wenn die Reihe im deaktivierten Zustand ist und nach dem zweiten Betriebszeitpunkt eine Nutzung des Fahrzeugs stattgefunden hat.

Gemäß einer weiteren Ausführungsform wird im Vorwählschritt mindestens einer der Betriebszeitpunkte als Zeitpunkt einer beabsichtigten Nutzung des Fahrzeugs vorgewählt. Das Verfahren umfasst dabei weiterhin einen Schritt des Berechnens einer Zeitdifferenz. Das Einschalten der Zusatzeinrichtung im Einschaltschritt erfolgt um die Zeitdifferenz versetzt vor dem Betriebszeitpunkt.

Der Detektierschritt kann auf unterschiedliche Weise ausgeführt werden. Gemäß einer Ausführungsform wird die Nutzung des Fahrzeugs aufgrund eines empfangenen Funksignals, insbesondere eines Funksignals zum Entriegeln des Fahrzeugs detektiert. Diese Ausführungsform ist besonders einfach zu verwirklichen, wenn ein entsprechendes Signal bereits durch eine Zentralverriegelungsvorrichtung ausgewertet und daher an zentraler Stelle einfach abgegriffen werden kann. Sie hat weiterhin den Vorteil, dass sie berücksichtigt, dass der Nutzer sich in der Nähe seines Fahrzeugs aufhält, auch wenn er dieses nicht besteigen sollte. Weiterhin ermöglicht sie es dem Nutzer, der das Fahrzeug für einen einzelnen Betriebszeitpunkt ausnahmsweise nicht nutzen möchte, über Fernwirkung eine Deaktivierung des folgenden Betriebszeitpunkts zu verhindern, ohne dass eine spezielle Fernbedienung benötigt würde.

Gemäß einer weiteren Ausführungsform wird die Nutzung des Fahrzeugs aufgrund eines Öffnens einer Tür des Fahrzeugs detektiert. Diese Ausführungsform hat den Vorteil, dass ein entsprechendes Signal auch in Fahrzeugen ohne Zentralverriegelung an einem oder mehreren Türschaltern abgegriffen werden kann. Zudem wird auch erkannt, wenn ein Fahrzeug ausnahmsweise mit dem mechanischen Schlüssel geöffnet wird. Optional wird das Öffnen einer bestimmten Tür oder einer bestimmten Gruppe von Türen detektiert. So lässt sich zum Beispiel bei Öffnen der Heckklappe auf reines Be- oder Entladen schließen und je nach Art der Zusatzeinrichtung unterschiedlich berücksichtigen.

Gemäß weiteren Ausführungsformen wird die Nutzung des Fahrzeugs bei Einschalten einer Zündung oder eines Motors des Fahrzeugs, oder aufgrund einer Bewegung des Fahrzeugs detektiert. So kann die Steuerung vorteilhaft angepasst werden, bestimmte Nutzungsarten zu erkennen, die für die zu steuernde Zusatzeinrichtung relevant ist. Beispielsweise ist es möglich, zur Steuerung einer Kühlwasserheizung nur den Betrieb des Motors als Nutzung des Fahrzeugs zu erkennen.

Die Erfindung wird im Folgenden anhand bevorzugter Ausführungsbeispiele unter Bezugnahme auf die zugehörigen Figuren der Zeichnung näher erläutert. In der Zeichnung zeigen dabei:
- Fig. 1: ein Blockdiagramm einer Steuervorrichtung für eine Fahrzeugzusatzeinrichtung gemäß einer Ausführungsform der Erfindung, und
- Fig. 2: ein Ablaufdiagramm eines Verfahrens zum Betreiben einer Fahrzeugzusatzeinrichtung gemäß einer Ausführungsform der Erfindung.

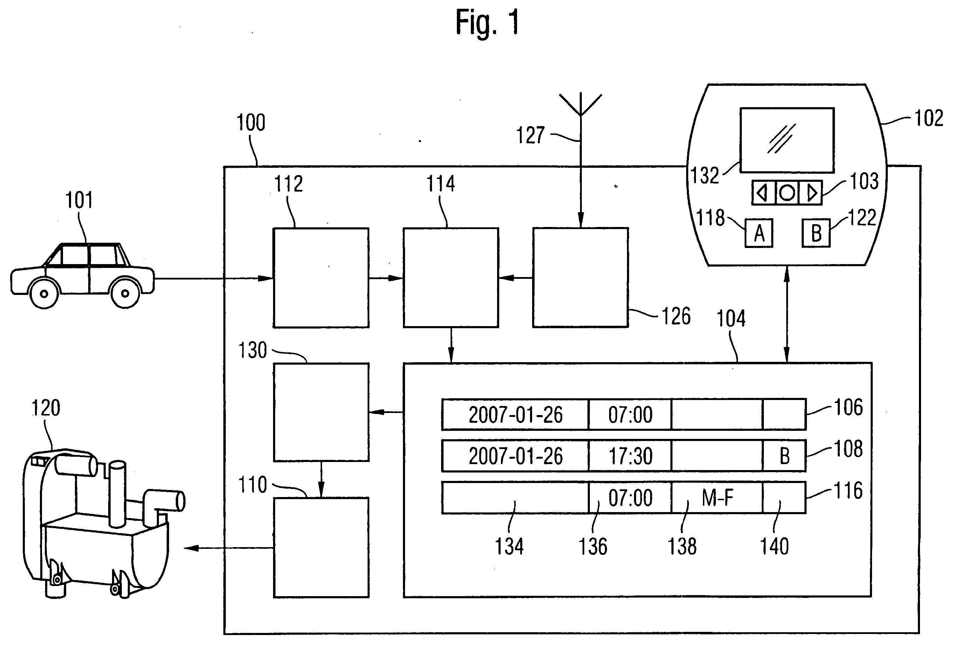

In Fig. 1 zeigt in Blockdarstellung eine Steuervorrichtung 100 für ein Zusatzgerät 120 eines Fahrzeugs 101. Die Zusatzeinrichtung 120 und die Steuervorrichtung 100 sind aus Gründen der Übersichtlichkeit separat dargestellt, können jedoch in das Fahrzeug 101 eingebaut oder mit diesem fest verbunden sein. Beispielsweise kann die Zusatzeinrichtung 120 eine im Fahrzeug 101 installierte Standheizung für den Fahrgastraum, für den Motor des Fahrzeugs oder für beides sein, wie auch eine Klimaanlage oder eine Lüftung.

Die Zusatzeinrichtung ist mit einer Schalteinheit 110 der Steuereinrichtung 100 verbunden, die die Zusatzeinrichtung 120 ansteuert, beispielsweise durch Schließen und Unterbrechen einer elektrischen Stromzufuhr oder durch Senden elektrischer Steuerbefehle an die Zusatzeinrichtung 120.

Die Steuervorrichtung 100 weist eine Bedieneinheit 102 auf, über die ein Nutzer des Fahrzeugs 101 die Zusatzeinrichtung bedient. Die Bedieneinheit 102 kann beispielsweise ein fest verdrahteter, im Fahrzeug 101 installierter Bestandteil der Steuervorrichtung 100 sein. Andererseits kann die Bedieneinheit 102 auch als drahtlose Fernbedienungsvorrichtung zusätzlich oder alternativ zu der fest verdrahteten Bedieneinheit 102 ausgeführt sein, wobei die Fernbedienungsvorrichtung mit der Steuervorrichtung 100 von innerhalb oder außerhalb des Fahrzeugs 101 drahtlos in Kontakt bringbar ist.

Die Bedieneinheit 102 umfasst ein Vorwählelement 103 zum Vorwählen gewünschter Betriebszeitpunkte 106, 108, 116 der Zusatzeinrichtung, beispielsweise durch Eingabe einer gewünschten Uhrzeit und eines gewünschten Datums. Weiterhin umfasst die Bedieneinheit 102 ein Anzeigeelement 132, auf dem unter anderem die vorgewählten Betriebszeitpunkte 106, 108, 116 angezeigt werden. Weiterhin umfasst die Bedieneinheit 102 ein Aktivierungswahlelement 118, das bei Betätigung einen auf dem Anzeigeelement 132 angezeigten Betriebszeitpunkt wahlweise aktiviert oder deaktiviert, und ein Bevorzugungselement 122, das bei Betätigung einen auf dem Anzeigeelement 132 angezeigten Betriebszeitpunkt als bevorzugt kennzeichnet.

Die Steuervorrichtung 100 umfasst weiterhin einen Speicher 104, der die über die Bedieneinheit 102 vorgewählten Betriebszeitpunkte 106, 108, 116 als Datensätze speichert. Dabei hat ein Datensatz jeweils die Bedeutung eines einzelnen Betriebszeitpunkts 106, 108 oder die Bedeutung einer Reihe 116 wiederkehrender Betriebszeitpunkte.

Jeder Datensatz weist eine Uhrzeitinformation 136 auf, die der Uhrzeit entspricht, zu der die Zusatzeinrichtung 120 betrieben werden soll. Die gespeicherte Uhrzeit hat die Bedeutung eines Zeitpunkts, zu dem die Zusatzeinrichtung 120 eingeschaltet werden soll, oder alternativ die Bedeutung eines Zeitpunkts, zu dem die Zusatzeinrichtung ihre Funktion beendet und das Fahrzeug in einen nutzungsbereiten Zustand gebracht haben soll.

Die beispielhaft gezeigten, als Datensatz gespeicherten Betriebszeitpunkte 106, 108 weisen zudem eine Datumsinformation 134 auf, durch die der jeweilige Tag des gewünschten Betriebs der Zusatzeinrichtung 120 festgelegt ist. Weiterhin ist der gezeigte Betriebszeitpunkt 108 im Speicher 104 durch eine Bevorzugungsinformation 140 als bevorzugter Betriebszeitpunkt 108 markiert, beispielsweise deshalb, weil der Nutzer den Zeitpunkt 108 bei der Eingabe über die Bedieneinheit 102 durch Betätigen des Bevorzugungselements 122 als bevorzugt markiert hat.

Der weiterhin beispielhaft gezeigte Datensatz 116 ist durch den Eintrag einer Wiederholungsinformation 138 als Reihe wiederkehrender Betriebszeitpunkte markiert, wobei der Eintrag "M-F" in Kombination mit der Uhrzeitinformation 136, die "07:00" festlegt, Betriebszeitpunkte an den Wochentagen Montag bis Freitag jeder Woche jeweils um 07:00 Uhr bedeutet.

Im Weiteren wird angenommen, dass die gespeicherte Uhrzeitinformation 136 jeweils die Bedeutung eines Zeitpunkts hat, zu dem die Zusatzeinrichtung ihre Funktion beendet und das Fahrzeug 101 in einen nutzungsbereiten Zustand gebracht haben soll. Die Steuervorrichtung 100 weist eine Berechnungseinheit 130 auf, die eine Zeitdifferenz berechnet, um die die Zusatzeinrichtung 120 früher als der gespeicherte Betriebszeitpunkt eingeschaltet werden muss, um das Fahrzeug pünktlich zum gespeicherten Betriebszeitpunkt in den nutzungsbereiten Zustand zu bringen.

Die Steuereinheit 100 umfasst weiterhin eine Detektiereinheit 112, die auf der Grundlage von Informationen über den Betriebszustand des Fahrzeugs 101, die die Detektiereinheit 112 von diesem erhält oder aktiv ermittelt, eine Nutzung des Fahrzeugs detektiert. Beispielsweise ist die Detektiereinheit zu diesem Zweck 100 über elektrische Leitungen mit einer Zentralverriegelung, Türkontakten und/oder dem Zündschloss des Fahrzeugs 101 verbunden.

Die Steuereinheit 100 umfasst weiterhin eine Deaktiviereinheit 114, die von der Detektiereinheit 112 über die Nutzung des Fahrzeugs 101 informiert wird und auf Grundlage der erhaltenen Information im Speicher 104 gespeicherte Betriebszeitpunkte 108, 116 und Reihen 116 wiederkehrender Betriebszeitpunkte deaktiviert, wenn die Zusatzeinrichtung 120 zu einem Betriebszeitpunkt 106 planmäßig durch die Schalteinheit 110 eingeschaltet, das Fahrzeug 101 jedoch anschließend nicht genutzt wurde.

Die Steuervorrichtung 100 umfasst weiterhin eine Kalendereinheit 126, die mit der Deaktiviereinheit 114 verbunden ist und dieser Informationen darüber liefert, ob ein gegebenes Datum ein arbeitsfreier Tag ist. Die Kalendereinheit 126 enthält eine programmierte Tabelle gesetzlicher Feiertage und arbeitsfreier Wochentage, die optional über die Bedieneinheit 102 verändert werden kann, z.B. verbunden mit Regional- und Spracheinstellungen. Die gezeigte Kalendereinheit 126 ist zudem mit einer externen Informationsquelle 127 wie einem Navigationssystem des Fahrzeugs verbunden und ermittelt die arbeitsfreien Tage unter Berücksichtigung der geografischen Position des Fahrzeugs.

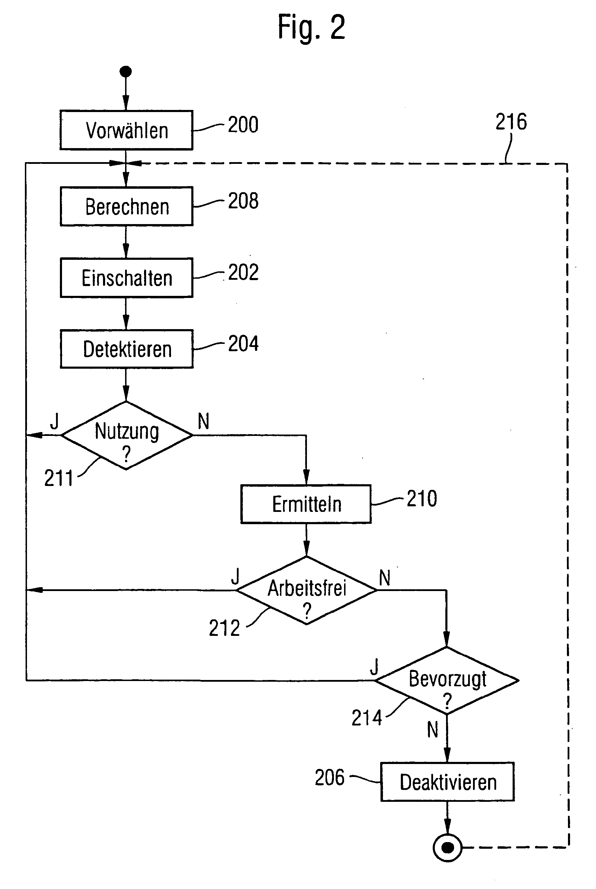

Figur 2 zeigt ein Ablaufdiagramm eines Verfahrens zum Betreiben einer Fahrzeugzusatzeinrichtung, bei dem beispielsweise die oben beschriebene Steuereinrichtung verwendet wird.

In Schritt 200 werden mehrere gewünschte Betriebszeitpunkte für die Zusatzeinrichtung vorgewählt, wobei im Folgenden angenommen wird, dass die vorgewählten Betriebszeitpunkte eine Reihe wiederkehrender Betriebszeitpunkte bilden, beispielsweise montags bis freitags jeweils 07:00 und 17:00 sowie samstags um 09:00 Uhr. Der Vorwählschritt 200 kann vom Nutzer des Fahrzeugs oder einer weiteren Person durchgeführt werden.

In Schritt 208 wird eine Zeitdifferenz berechnet, um die Zusatzeinrichtung früher als der erste vorgewählte Betriebszeitpunkt eingeschaltet werden muss, um das Fahrzeug zum vorgewählten Zeitpunkt in einen nutzungsbereiten Zustand zu bringen. Diese Berechnung kann von äußeren Parametern wie einer Temperaturmessung abhängen. Wenn die vorgewählten Betriebszeitpunkte als Einschaltzeitpunkte gewählt wurden, entfällt dieser Schritt.

In Schritt 202 wird die Zusatzeinrichtung zum ersten Betriebszeitpunkt eingeschaltet, und zwar unter Berücksichtigung der Zeitdifferenz, falls eine solche in Schritt 208 berechnet wurde. Im Ergebnis dieses Schritts ist das Fahrzeug zum gewünschten Zeitpunkt bereit, genutzt zu werden.

In Schritt 204 wird detektiert, ob das Fahrzeug im Anschluss an Schritt 202 tatsächlich genutzt wird, beispielsweise dadurch, dass von der Zentralverriegelung und den Türkontakten im Personenraum abgegriffene Schaltsignale überwacht werden und bei einem Schaltereignis eines beliebigen dieser Signale auf Nutzung des Fahrzeugs geschlossen wird. Dabei kann der überwachte Zeitraum sich bis vor den nächstfolgenden vorgewählten Zeitpunkt erstrecken oder zeitlich begrenzt sein.

Wurde in Schritt 204 auf eine Nutzung des Fahrzeugs erkannt, so wird in Verzweigung 211 zu Schritt 208 gesprungen, um die Ausführung des nächstfolgenden Betriebszeitpunkts zu beginnen. Wurde keine Nutzung erkannt, wird in Schritt 210 ermittelt, ob der Tag des letzten Betriebszeitpunkts ein arbeitsfreier Tag war, beispielsweise durch Überprüfen des betreffenden Wochentags oder eines Feiertagkalenders. War dies der Fall, so wird in Verzweigung 212 ebenfalls zu Schritt 208 gesprungen, um die Ausführung des nächstfolgenden Betriebszeitpunkts zu beginnen. War der Tag des letzten Betriebszeitpunkts nicht arbeitsfrei, so wird in Verzweigung 214 noch überprüft, ob der als nächstes vorgewählte Betriebszeitpunkt mit bevorzugtem Status vorgewählt wurde. Ist dies der Fall, so wird ebenfalls zu Schritt 208 gesprungen, um die Ausführung des nächstfolgenden Betriebszeitpunkts zu beginnen.

Im gegenteiligen Fall wird in Schritt 206 die vorgewählte Reihe der wiederkehrenden Betriebszeitpunkte deaktiviert und die Ausführung abgebrochen, wobei dem Nutzer die Möglichkeit bleibt, die vorgewählte Reihe zu reaktivieren, wie durch eine gestrichelte Linie 216 angedeutet ist. Optional kann das Reaktivieren automatisch erfolgen, sobald eine Nutzung des Fahrzeugs festgestellt wird, oder aber der Nutzer interaktiv aufgefordert werden, eine vorgeschlagene Reaktivierung zu bestätigen.

### Bezugszeichenliste

- 100: Steuervorrichtung
- 101: Fahrzeug
- 102: Bedieneinheit
- 103: Vorwählelement
- 104: Speicher
- 106, 108: Betriebszeitpunkte
- 110: Schalteinheit
- 112, 114: Detektiereinheiten
- 116: Reihe wiederkehrender Betriebszeitpunkte
- 118: Aktivierungswahlelement
- 120: Zusatzeinrichtung
- 122: Bevorzugungselement
- 124: Bevorzugter Betriebszeitpunkt
- 126: Kalendereinheit
- 127: Informationsquelle
- 130: Berechnungseinheit
- 132: Anzeigeelement
- 134: Datumsinformation
- 136: Uhrzeitinformation
- 138: Wiederholungsinformation
- 140: Bevorzugungsstatus
- 200: Vorwählschritt
- 202: Einschaltschritt
- 204: Detektierschritt
- 206: Deaktivierschritt
- 208: Berechnungsschritt
- 210: Ermittlungsschritt
- 211 - 214: Verzweigungen

## Patentansprüche

1. Steuervorrichtung (100) für eine Zusatzeinrichtung (120) für oder in einem Fahrzeug (101),
mit einem Speicher (104), der einen ersten (106) und einen zweiten (108) vorgewählten Betriebszeitpunkt der Zusatzeinrichtung speichert;
mit einer Schalteinheit (110), die die Zusatzeinrichtung des Fahrzeugs zu den gespeicherten Betriebszeitpunkten (106, 108) einschaltet;
mit eine Detektiereinheit (112), die detektiert, ob eine Nutzung des Fahrzeugs stattfindet;
**dadurch gekennzeichnet, dass**
ein Mittel (114) zum Deaktivieren des zweiten Betriebszeitpunkts, wenn die Detektiereinheit keine Nutzung des Fahrzeugs zum ersten Betriebszeitpunkt detektiert vorgesehen ist.

2. Steuervorrichtung (100) nach Anspruch 1, **dadurch gekennzeichnet, dass** die Steuervorrichtung weiterhin eine Bedieneinheit (102) aufweist, die ein Vorwählelement (103) zum Vorwählen mindestens eines der Betriebszeitpunkte umfasst, wobei insbesondere das Vorwählelement zur Eingabe eines Wochentages und/oder eines Datums des Betriebszeitpunkts ausgebildet ist.

3. Steuervorrichtung (100) nach Anspruch 2, **dadurch gekennzeichnet, dass** das Vorwählelement (103) dazu ausgebildet ist, die Betriebszeitpunkte (106, 108) als Teile einer Reihe (116) wiederkehrender Betriebszeitpunkte vorzuwählen, wobei das Mittel (114) zum Deaktivieren dazu ausgebildet ist, die Reihe zu deaktivieren, wenn die Detektiereinheit (112) keine Nutzung des Fahrzeugs (101) zum ersten Betriebszeitpunkt (106) detektiert.

4. Steuervorrichtung (100) nach wenigstens einem der Ansprüche 2 und 3, **dadurch gekennzeichnet, dass** die Bedieneinheit (102) weiterhin ein Aktivierungswahlelement (118) umfasst, das den zweiten Betriebszeitpunkt (108) wahlweise aktiviert.

5. Steuervorrichtung (100) nach Anspruch 4, **dadurch gekennzeichnet, dass** die Bedieneinheit weiterhin ein Anzeigeelement (132) umfasst, das beim Abstellen des Fahrzeugs (101) einen nächsten der vorgewählten Betriebszeitpunkte anzeigt, wobei das Aktivierungswahlelement (118) dazu ausgebildet ist, den angezeigten Betriebszeitpunkt wahlweise zu aktivieren oder deaktivieren.

6. Steuervorrichtung (100) nach wenigstens einem der Ansprüche 2 bis 5, **dadurch gekennzeichnet, dass** die Bedieneinheit (102) weiterhin ein Bevorzugungsele-, ment (122) umfasst, das den zweiten Betriebszeitpunkt als bevorzugten Betriebszeitpunkt (124) vorwählt, wobei das Mittel (114) zum Deaktivieren dazu ausgebildet ist, den zweiten Betriebszeitpunkt nicht zu deaktivieren, wenn der zweite Betriebszeitpunkt als bevorzugter Betriebszeitpunkt vorgewählt ist.

7. Steuervorrichtung (100) nach einem der Ansprüche 2 bis 6, **dadurch gekennzeichnet, dass** die Bedieneinheit (102) als drahtlose Fernbedienungsvorrichtung für die Steuervorrichtung ausgebildet ist.

8. Steuervorrichtung (100) nach wenigstens einem der vorhergehenden Ansprüche, **dadurch gekennzeichnet, dass** die Steuervorrichtung weiterhin eine Kalendereinheit (126) aufweist, die ermittelt, ob der Tag des ersten Betriebszeitpunkts (106) ein arbeitsfreier Tag ist, wobei das Mittel zum Deaktivieren dazu ausgebildet ist, den zweiten Betriebszeitpunkt (108) nicht zu deaktivieren, wenn der Tag des ersten Betriebszeitpunkts ein arbeitsfreier Tag ist.

9. Steuervorrichtung (100) nach wenigstens einem der vorhergehenden Ansprüche, **dadurch gekennzeichnet, dass** die Steuervorrichtung weiterhin eine Berechnungseinheit (130) umfasst, die für mindestens einen der Betriebszeitpunkte (106, 108) eine Zeitdifferenz berechnet, wobei die Schalteinheit (110) dazu ausgebildet ist, die Zusatzeinrichtung (120) um die Zeitdifferenz vor dem Betriebszeitpunkt einzuschalten.

10. Zusatzeinrichtung (120) für oder in einem Fahrzeug (101), mit einer Steuervorrichtung (100) gemäß einem der Ansprüche 6 bis 9.

11. Verfahren zum Betreiben einer Zusatzeinrichtung (120) für oder in einem Fahrzeug (101), mit den Schritten:
Vorwählen (200) eines ersten (106) und eines zweiten (108) Betriebszeitpunkts der Zusatzeinrichtung;
Einschalten (202) der Zusatzeinrichtung zum ersten Betriebszeitpunkt;
Detektieren (204), ob zum ersten Betriebszeitpunkt eine Nutzung des Fahrzeugs stattfindet; und
Deaktivieren (206) des zweiten Betriebszeitpunkts, wenn zum ersten Betriebszeitpunkt keine Nutzung stattgefunden hat.

12. Verfahren nach Anspruch 11, **dadurch gekennzeichnet, dass** die Betriebszeitpunkte (106, 108) als Teile einer Reihe (116) wiederkehrender Betriebszeitpunkte vorgewählt werden, wobei die Reihe deaktiviert wird, wenn keine Nutzung des Fahrzeugs (101) zum ersten Betriebszeitpunkt (106) detektiert wurde.

13. Verfahren nach Anspruch 12, **dadurch gekennzeichnet, dass** weiterhin die Schritte vorgesehen sind:
Detektieren, ob nach dem zweiten Betriebszeitpunkt eine Nutzung des Fahrzeugs stattfindet;
Reaktivieren (216) der Reihe, wenn die Reihe deaktiviert wurde und nach dem zweiten Betriebszeitpunkt eine Nutzung des Fahrzeugs stattgefunden hat.

14. Verfahren nach wenigstens einem der Ansprüche 11 bis 13, **dadurch gekennzeichnet, dass** das Vorwählen (200) eines der Betriebszeitpunkte das Eingeben eines Tages umfasst, und insbesondere das Eingeben eines Datums umfasst.

15. Verfahren nach wenigstens einem der Ansprüche 11 bis 14, **dadurch gekennzeichnet, dass** mindestens einer der Betriebszeitpunkte als Zeitpunkt einer beabsichtigten Nutzung des Fahrzeugs (101) vorgewählt wird, wobei das Verfahren weiterhin einen Schritt des Berechnens (208) einer Zeitdifferenz umfasst und das Einschalten (202) der Zusatzeinrichtung um die Zeitdifferenz vor dem Betriebszeitpunkt erfolgt.

16. Verfahren nach wenigstens einem der Ansprüche 11 bis 15, **dadurch gekennzeichnet, dass** die Nutzung des Fahrzeugs (101) aufgrund eines empfangenen Funksignals, insbesondere eines Funksignals zum Entriegeln des Fahrzeugs detektiert wird.

17. Verfahren nach wenigstens einem der Ansprüche 11 bis 16, **dadurch gekennzeichnet, dass** die Nutzung des Fahrzeugs (101) aufgrund eines Öffnens einer Tür des Fahrzeugs, insbesondere einer bestimmten Tür oder einer Tür einer bestimmten Gruppe von Türen detektiert wird.

18. Verfahren nach wenigstens einem der Ansprüche 11 bis 17, **dadurch gekennzeichnet, dass** die Nutzung des Fahrzeugs (101) aufgrund eines Einschaltens einer Zündung oder eines Motors des Fahrzeugs detektiert wird.

19. Verfahren nach wenigstens einem der Ansprüche 11 bis 18, **dadurch gekennzeichnet, dass** die Nutzung des Fahrzeugs (101) aufgrund einer Bewegung des Fahrzeugs detektiert wird.

20. Verfahren nach wenigstens einem der Ansprüche 11 bis 19, **dadurch gekennzeichnet, dass** der zweite Betriebszeitpunkt wahlweise als bevorzugter Betriebszeitpunkt (124) vorgewählt wird, wobei der zweite Betriebszeitpunkt nicht deaktiviert wird, wenn er als bevorzugter Betriebszeitpunkt vorgewählt ist.

21. Verfahren nach wenigstens einem der Ansprüche 11 bis 20, **gekennzeichnet durch** einen den weiteren Schritt: Ermitteln (210), ob der Tag des ersten Betriebszeitpunkts (106) ein arbeitsfreier Tag ist, wobei der zweite Betriebszeitpunkt (108) nicht deaktiviert wird, wenn der Tag des ersten Betriebszeitpunkts ein arbeitsfreier Tag ist.

## Claims

1. A control apparatus (100) for an additional device (120) for or in a vehicle, comprising
a memory (104) which stores a first (106) and a second (108) preselected moment of operation of the additional device;
a switching unit (110) which switches on the additional device of the vehicle at the stored moments of operation (106, 108);
a detection unit (112) which detects whether a utilization of the vehicle occurs;
**characterized in that** a means (114) is provided for deactivating the second moment of operation when the detection unit does not detect any utilization of the vehicle at the first moment of operation.

2. A control apparatus (100) according to claim 1, **characterized in that** the control apparatus further comprises an operator control unit (102) which comprises a preselection element (103) for preselecting at least one of the moments of operation, with the preselection element being arranged especially for entering a day of the week and/or a date of the moment of operation.

3. A control apparatus (100) according to claim 2, **characterized in that** the preselection element (103) is arranged to preselect the moments of operation (106, 108) as part of a sequence (116) of repeating moments of operation, with the means (114) for deactivation being arranged for the purpose to deactivate the sequence when the detection unit (112) does not detect any utilization of the vehicle (101) at the first moment of operation (106).

4. A control apparatus (100) according to at least one of the claims 2 and 3, **characterized in that** the operator control unit (102) further comprises an activation selection element (118) which optionally activates the second moment of operation (108).

5. A control apparatus (100) according to claim 4, **characterized in that** the operator control unit further comprises a display element (132) which upon switching off the vehicle (101) displays the next one of the preselected moments of operation, with the activation selection element (118) being arranged to optionally activate or deactivate the indicated moment of operation.

6. A control apparatus (100) according to at least one of the claims 2 to 5, **characterized in that** the operator control unit (102) further comprises a preference element (122) which preselects the second moment of operation as the preferred moment of operation (124), with the means (114) for deactivation being arranged so as to not deactivate the second moment of operation when the second moment of operation is preselected as the preferred moment of operation.

7. A control apparatus (100) according to at least one of the claims 2 to 6, **characterized in that** the operator control unit (102) is arranged as a wireless remote control apparatus for the control apparatus.

8. A control apparatus (100) according to at least one of the preceding claims, **characterized in that** the control apparatus further comprises a calendar unit (126) which determines whether the day of the first moment of operation (106) is a non-working day, with the means for deactivating being arranged so as to not deactivate the second moment of operation (108) when the day of the first moment of operation is a non-working day.

9. A control apparatus (100) according to at least one of the preceding claims, **characterized in that** the control apparatus further comprises a computing unit (130) which calculates a time difference for at least one of the moments of operation (106, 108), with the switching unit (110) being arranged to switch on the additional device (120) by the time difference before the moment of operation.

10. An additional device (120) for or in a vehicle (101), comprising a control apparatus (100) according to one of the claims 6 to 9.

11. A method for operating an additional device (120) for or in a vehicle (101), comprising the following steps:
preselection (200) of a first (106) and a second (108) moment of operation of the additional device;
switching on (202) of the additional device for the first moment of operation;
detection (204) of whether there is a utilization of the vehicle at the first moment of operation, and
deactivation (206) of the second moment of operation when there has not been any utilization at the first moment of operation.

12. A method according to claim 11, **characterized in that** the moments of operation (106, 108) are preselected as parts of a sequence (116) of repeating moments of operation, with the sequence being deactivated when no utilization of the vehicle (101) has been detected at the first moment of operation (106).

13. A method according to claim 12, **characterized in that** the following steps are further provided:
detection of whether there is a utilization of the vehicle after the second moment of operation;
reactivation (216) of the sequence when the sequence was deactivated and a utilization of the vehicle as occurred after the second moment of operation.

14. A method according to at least one of the claims 11 to 13, **characterized in that** the preselection (200) of one of the moments of operation comprises the input of a day, and especially the input of a date.

15. A method according to at least one of the claims 11 to 14, **characterized in that** at least one the moments of operation is preselected as a time of an intended utilization of the vehicle (101), with the method further comprising a step of the calculation (208) of a time difference and the activation (202) of the additional device occurring by the time different before the moment of operation.

16. A method according to at least one of the claims 11 to 15, **characterized in that** the utilization of the vehicle (101) is detected on the basis of a received radio signal, especially a radio signal for unlocking the vehicle.

17. A method according to at least one of the claims 11 to 16, **characterized in that** the utilization of the vehicle is detected on the basis of an opening of a door of the vehicle, especially a specific door or a door of a certain group of doors.

18. A method according to at least one of the claims 11 to 17, **characterized in that** the utilization of the vehicle (101) is detected as a result of switching on an ignition or a motor of the vehicle.

19. A method according to at least one of the claims 11 to 18, **characterized in that** the utilization of the vehicle (101) is detected as a result of a movement of the vehicle.

20. A method according to at least one of the claims 11 to 19, **characterized in that** the second moment of operation is preselected optionally as a preferred moment of operation (124), with the second moment of operation not being deactivated when it is preselected as a preferred moment of operation.

21. A method according to at least one of the claims 11 to 20, **characterized by** one further step:
determining (210) whether the day of the first moment of operation (106) is a non-working day, with the second moment of operation (108) not being deactivated when the day of the first moment of operation is a non-working day.

## Revendications

1. Dispositif de contrôle (100) pour un dispositif supplémentaire (120) pour ou dans un véhicule (101),
avec une mémoire (104) qui mémorise un premier moment de fonctionnement présélectionné (106) du dispositif supplémentaire et un deuxième (108) ;
avec une unité de commutation (110) qui active le dispositif supplémentaire du véhicule aux moments de fonctionnement mémorisés (106, 108) ;
avec une unité de détection (112) qui détecte si une utilisation du véhicule a lieu ; **caractérisé en ce qu'**un moyen (114) est prévu pour désactiver le deuxième moment de fonctionnement quand l'unité de détection ne détecte aucune utilisation du véhicule au premier moment de fonctionnement.

2. Dispositif de contrôle (100) selon la revendication 1, **caractérisé en ce que** le dispositif de contrôle comprend en outre une unité de commande (102) qui comprend un élément de présélection (103) pour la présélection d'au moins un des moments de fonctionnement, l'élément de présélection étant en particulier conçu pour la saisie d'un jour de la semaine et/ou d'une date du moment de fonctionnement.

3. Dispositif de contrôle (100) selon la revendication 2, **caractérisé en ce que** l'élément de présélection (103) est conçu pour présélectionner les moments de fonctionnement (106, 108) comme des parties d'une série (116) de moments de fonctionnement récurrents, le moyen (114) de désactivation étant conçu pour désactiver la série si l'unité de détection (112) ne détecte aucune utilisation du véhicule (101) au premier moment de fonctionnement (106).

4. Dispositif de contrôle (100) selon l'une au moins des revendications 2 et 3, **caractérisé en ce que** l'unité de commande (102) comprend en outre un élément sélectif d'activation (118) qui active sélectivement le deuxième moment de fonctionnement (108).

5. Dispositif de contrôle (100) selon la revendication 4, **caractérisé en ce que** l'unité de commande comprend en outre un élément indicateur (132) qui indique, lors de l'arrêt du véhicule (101), un moment suivant parmi les moments de fonctionnement présélectionnés, l'élément sélectif d'activation (118) étant conçu pour activer ou désactiver sélectivement le moment de fonctionnement indiqué.

6. Dispositif de contrôle (100) selon l'une au moins des revendications 2 à 5, **caractérisé en ce que** l'unité de commande (102) comprend en outre un élément préférentiel (122) qui présélectionne le deuxième moment de fonctionnement comme moment de fonctionnement préféré (124), le moyen (114) de désactivation étant conçu pour ne pas désactiver le deuxième moment de fonctionnement si le deuxième moment de fonctionnement est présélectionné comme moment de fonctionnement préféré.

7. Dispositif de contrôle (100) selon l'une des revendications 2 à 6, **caractérisé en ce que** l'unité de commande (102) est conçue comme un dispositif de commande à distance sans fil pour le dispositif de contrôle.

8. Dispositif de contrôle (100) selon l'une au moins des revendications précédentes, **caractérisé en ce que** le dispositif de contrôle comprend en outre une unité de calendrier (126) qui déterminer si le jour du premier moment de fonctionnement (106) est un jour non ouvrable, le moyen de désactivation étant conçu pour ne pas désactiver le deuxième moment de fonctionnement (108) si le jour du premier moment de fonctionnement est un jour non ouvrable.

9. Dispositif de contrôle (100) selon l'une au moins des revendications précédentes, **caractérisé en ce que** le dispositif de contrôle comprend en outre une unité de calcul (130) qui calcule une différence de temps pour au moins un des moments de fonctionnement (106, 108), l'unité de commutation (110) étant conçue pour activer le dispositif supplémentaire (120) à la différence de temps avant le moment de fonctionnement.

10. Dispositif supplémentaire (120) pour ou dans un véhicule (101), avec un dispositif de contrôle (100) selon l'une des revendications 6 à 9.

11. Procédé pour l'utilisation d'un dispositif supplémentaire (120) pour ou dans un véhicule (101), avec les étapes de :
présélection (200) d'un premier moment de fonctionnement (106) du dispositif supplémentaire et d'un deuxième (108) ;
activation (202) du dispositif supplémentaire au premier moment de fonctionnement ; détection (204) du fait qu'une utilisation du véhicule a lieu ou non au premier moment de fonctionnement ; et
désactivation (206) du deuxième moment de fonctionnement s'il n'y a eu aucune utilisation au premier moment de fonctionnement.

12. Procédé selon la revendication 11, **caractérisé en ce que** les moments de fonctionnement (106, 108) sont présélectionnés comme des parties d'une série (116) de moments de fonctionnement récurrents, laquelle série est désactivée si aucune utilisation du véhicule (101) n'a été détectée au premier moment de fonctionnement (106).

13. Procédé selon la revendication 12, **caractérisé en ce que** sont en outre prévues les étapes de :
détection du fait qu'une utilisation du véhicule a lieu ou non après le deuxième moment de fonctionnement ;
réactivation (216) d'une série, si la série a été désactivée et si une utilisation du véhicule a eu lieu après le deuxième moment de fonctionnement.

14. Procédé selon l'une au moins des revendications 11 à 13, **caractérisé en ce que** la présélection (200) d'un des moments de fonctionnement comprend la saisie d'un jour et en particulier la saisie d'une date.

15. Procédé selon l'une au moins des revendications 11 à 14, **caractérisé en ce que** l'un au moins des moments de fonctionnement est présélectionné comme moment d'une utilisation prévue du véhicule (101), le procédé comprenant en outre une étape de calcul (208) d'une différence de temps et l'activation (202) du dispositif supplémentaire ayant lieu à la différence de temps avant le moment de fonctionnement.

16. Procédé selon l'une au moins des revendications 11 à 15, **caractérisé en ce que** l'utilisation du véhicule (101) est détectée sur la base d'un signal radio reçu, en particulier d'un signal radio pour le déverrouillage du véhicule.

17. Procédé selon l'une au moins des revendications 11 à 16, **caractérisé en ce que** l'utilisation du véhicule (101) est détectée sur la base d'une ouverture d'une porte du véhicule, en particulier d'un certaine porte ou d'une porte parmi un certain groupe de portes.

18. Procédé selon l'une au moins des revendications 11 à 17, **caractérisé en ce que** l'utilisation du véhicule (101) est détectée sur la base d'une activation d'un allumage ou d'un moteur du véhicule.

19. Procédé selon l'une au moins des revendications 11 à 18, **caractérisé en ce que** l'utilisation du véhicule (101) est détectée sur la base d'un déplacement du véhicule.

20. Procédé selon l'une au moins des revendications 11 à 19, **caractérisé en ce que** le deuxième point de fonctionnement est présélectionné sélectivement comme point de fonctionnement préféré (124), le deuxième point de fonctionnement n'étant pas désactivé quand il est présélectionné comme point de fonctionnement préféré.

21. Procédé selon l'une au moins des revendications 11 à 20, **caractérisé en ce qu'**il comprend en outre une étape de détermination (210) du fait que le jour du premier moment de fonctionnement (106) est ou non un jour non ouvrable, le deuxième point de fonctionnement (108) n'étant pas désactivé si le jour du premier moment de fonctionnement est un jour non ouvrable.
